# FASCICULE DE BREVET EUROPEEN

(11) **EP 2 350 677 B1**
(45) Date de publication et mention de la délivrance du brevet: **07.09.2016**
(21) Numéro de dépôt: 09760243.7
(22) Date de dépôt: 30.10.2009
(51) Int. Cl.: G01N 35/10

(54) **DISPOSITIF DE PRÉPARATION ET/OU DE TRAITEMENT D'UN ÉCHANTILLON BIOLOGIQUE**
VERFAHREN ZUR VORBEREITUNG UND/ODER BEHANDLUNG EINER BIOLOGISCHEN PROBE
DEVICE FOR PREPARING AND/OR TREATING A BIOLOGICAL SAMPLE

(30) Priorité: 05.11.2008 FR 0806171
(43) Date de publication de la demande: 03.08.2011
(73) Titulaire: Commissariat à l'Énergie Atomique et aux Énergies Alternatives, 75015 Paris (FR); Biomérieux, 69280 Marcy L'etoile (FR)
(72) Inventeur: BROYER, Patrick, FR-38500 SAINT CASSIEN (FR); DURIN, Guillaume, F-91190 Gif sur Yvette (FR); DELATTRE, Cyril, F-38140 Izeaux (FR); FOUCAULT, Frédéric, 69290 Craponne (FR)
(74) Mandataire: Verriest, Philippe
(86) Numéro de dépôt international: PCT/FR2009/052104
(87) Numéro de publication internationale: WO 2010/052413

(56) Documents cités:
- WO-A-95/21382
- WO-A-2007/011305
- WO-A-2008/107639
- FR-A- 2 897 282
- US-A- 3 713 780
- US-A- 4 083 638
- US-A- 5 756 905
- US-A- 6 048 735
- US-A1- 2006 043 284

## Description

### DOMAINE TECHNIQUE

La présente invention concerne un dispositif de préparation et/ou de traitement et/ou d'analyse d'un échantillon biologique.

Un tel dispositif est destiné notamment à être utilisé dans le cadre de l'automatisation de protocoles biologiques, notamment de protocoles biologiques complexes.

A titre d'exemple non limitatif, un tel dispositif peut être appliqué à la détection de pathogènes ou des molécules, acides nucléiques ou protéines, d'un pathogène. En particulier, il est souhaitable qu'une telle détection soit réalisée directement sur le lieu de prélèvement.

Cette détection comprend une première phase de préparation de l'échantillon, consistant par exemple en une extraction d'ADN, réalisée généralement par des protocoles biologiques complexes comprenant plusieurs étapes, plusieurs réactifs, et l'utilisation de fonctions annexes comme le chauffage, suivie par une phase de détection des pathogènes, utilisant par exemple une réaction de polymérisation en chaine (PCR) quantitative. La réalisation de la détection sur le lieu du prélèvement impose des contraintes d'encombrement, de non contamination, d'automatisation et de robustesse.

Un tel protocole biologique doit être réalisé de préférence dans un dispositif consommable à faible coût, lié au module de détection, et qui est changé entre chaque test. Ce consommable peut être inséré dans un appareil de traitement contenant les composants coûteux, par exemple des composants mécaniques ou optiques.

### ETAT DE LA TECHNIQUE ANTERIEURE

Différentes techniques sont utilisées pour automatiser des protocoles biologiques complexes comme la préparation et l'extraction de l'ADN à partir d'un échantillon de quelques millilitres. Dans tous les cas, la présence de plusieurs réactifs nécessite l'existence de différentes chambres de stockage et d'au moins une chambre de réaction. Des moyens permettant le déplacement des fluides sont également nécessaires.

Un premier dispositif connu, utilisé notamment par la société Genpoint et mettant en oeuvre un robot de préparation commercialisé par la société Tecan, comprend des moyens de déplacement en trois dimensions d'une pipette et une plaque présentant une pluralité de puits, les puits contenant soit un réactif, soit un échantillon.

La pipette est déplacée au dessus de la plaque de façon à être positionnée dans un puits afin de prélever une quantité de réactif, puis positionnée dans le puits contenant l'échantillon afin de délivrer la quantité de réactif dans ce puits, ceci de façon successive pour chaque réactif.

Des moyens additionnels nécessaires au déroulement des réactions, en particulier des moyens de chauffage ou de capture magnétique (sédimentation magnétique de particules en suspension) peuvent être disposés sous la plaque.

Un tel dispositif présente l'inconvénient d'utiliser des moyens mécaniques de précision pour le déplacement de la pipette, complexes et difficilement transportables.

En outre, un tel dispositif comprend des puits ouverts, dans lesquels des contaminations entre puits peuvent survenir.

Afin de limiter ces contaminations, il a été envisagé notamment d'utiliser des cônes de pipette à usage unique, éventuellement cotonnés pour éviter les contaminations sous forme d'aérosols, de prévoir des moyens de lavage des aiguilles de prélèvement, pour éviter les contaminations par contact, ou encore d'embarquer des réactifs dans des récipients consommables fermés à usage unique. Ainsi, dans certains dispositifs comparables à des robots de pipetage, les réactifs sont embarqués dans des consommables à usage unique qui ne sont ouverts que lors du test. En particulier, le système VIDAS^{®} commercialisé par la société bioMérieux comprend un tel dispositif. Cependant, la chambre contenant le volume réactionnel se trouve toujours à l'air libre, d'où de possibles contaminations aérosols. Il existe également des plaques à puits comprenant des réservoirs fermés par des opercules ou des septa. Ces réservoirs sont répartis sur un même plan. Le déplacement de la tête de prélèvement s'effectue donc suivant trois axes.

Pour éviter les contaminations entre tests il a donc été envisagé de réaliser des tests unitaires dans des dispositifs hermétiques, à usage unique.

Ainsi les documents US6878540, US6440725 et US6881541 décrivent des dispositifs comportant une cartouche à usage unique comprenant un ensemble de chambres ou réservoirs destinés à recevoir notamment un échantillon, des fluides de lavage, d'élution, des réactifs, les chambres ou réservoirs étant reliés par un ensemble de canaux. Ces dispositifs comprennent également une puce microfluidique. Le mouvement des fluides entre les différentes chambres et réservoirs est assuré par l'intermédiaire de l'ensemble de canaux sous l'effet de pompes et de moyens de contrôle de flux de type soupapes ou diodes fluidiques. Une des utilisations de ces dispositifs est la réalisation du traitement d'un échantillon fluidique pour extraire et amplifier des acides nucléiques, notamment par PCR.

Le document US6734684 décrit pour sa part également une cartouche à usage unique comprenant un ensemble de chambres et de réservoirs. Dans le cas de ce document, une chambre de traitement unique est utilisée qui peut être mise en communication fluidique avec d'autres chambres ou réservoirs de façon sélective par l'intermédiaire de canaux ménagés dans un organe rotatif.

Ces solutions permettent effectivement de diminuer les contaminations, mais impliquent la mise en place d'une structure de communication fluidique entre les chambres et de déplacement qui reste complexe.

Le document US6964862 décrit un dispositif comprenant un élément à usage unique présentant des chambres séparées par des parois permettant une communication fluidique au dessus d'une pression déterminée. Chaque chambre est remplie avec un fluide spécifique avant fermeture. La mise en communication des fluides contenus dans deux chambres voisines est réalisée par pression mécanique sur l'une des deux chambres, qui provoque l'apparition d'une ouverture dans la paroi de séparation.

Ce dispositif permet de simplifier la réalisation de la communication entre les chambres, et permet également de limiter la contamination entre tests. Il présente toutefois l'inconvénient de devoir réaliser une utilisation séquentielle et irréversible des chambres.

Le document WO95/21382 décrit un dispositif comprenant un élément à usage unique présentant une première chambre, une seconde chambre et une troisième chambre alignées dans cet ordre et séparées par des parois en polymère. Des moyens d'aspiration sont reliés au volume de la seconde chambre. Une aiguille délimitant une cavité interne comprenant deux ouvertures situées aux deux extrémités de la cavité interne peut être déplacée de façon à réaliser une communication entre la première chambre et la seconde, ou entre la seconde chambre et la troisième.

Ce dispositif impose une utilisation des chambres selon un ordre prédéterminé avec un mouvement du fluide imposé vers la seconde chambre et est limité à une utilisation de trois chambres. L'utilisation des chambres est également irréversible.

### EXPOSE DE L'INVENTION

La présente invention a pour but de résoudre tout ou partie des inconvénients mentionnés ci-dessus.

A cet effet, la présente invention a pour objet un dispositif de préparation, de traitement et/ou d'analyse d'un échantillon biologique comprenant un ensemble de chambres de stockage et/ou réactionnelles destinées à recevoir un fluide , lesdites chambres possédant des parois communes ou adjacentes de façon à constituer un ensemble de chambres adjacentes alignées selon un axe donné, tel qu'au moins une desdites parois comporte une membrane ou septum, ladite membrane étant susceptible d'être transpercée par une aiguille puis de recouvrer son étanchéité une fois l'aiguille retirée., des moyens de déplacement dudit fluide à partir et/ou vers au moins l'une desdites chambres du l'ensemble, lesdits moyens de déplacement comprenant : une aiguille reliée à un compartiment de transfert, des moyens d'aspiration/refoulement dudit liquide reliés à l'aiguille en amont de celle-ci et de façon séparée du volume des chambres de l'ensemble, et des moyens d'entraînement agencés pour déplacer en translation l'un par rapport à l'autre l'aiguille et l'ensemble de chambres selon l'axe d'alignement des chambres le ou les septums constituant la ou les paroi(s) étant située(s) dans un plan traversé par l'axe d'alignement des chambres.

Ainsi, lors de la réalisation d'un protocole biologique, l'aiguille peut prélever ou déverser un fluide dans une premier chambre, puis être déplacée selon un axe de façon à traverser les septa pour être positionnée dans une seconde chambre et à déverser ou prélever une quantité de fluide dans cette chambre.

L'aiguille est reliée aux moyens d'aspiration/refoulement par un circuit de communication fluidique séparé du volume des chambres. L'aspiration et ou le refoulement de fluide peut être réalisée de façon indifférenciée dans l'une quelconque des chambres de l'ensemble de chambres.

L'agencement de l'assemblage des chambres est réalisé de sorte que les déplacements mécaniques de l'aiguille pour transférer les liquides d'une chambre à une autre soient minimisés, l'agencement étant adapté à la gestion de différentes gammes de volumes.

Les dispositions selon la présente invention permettent ainsi de s'affranchir de composants mécaniques complexes de type vannes par un système d'adressage fluidique simple et compact nécessitant un seul axe de déplacement.

L'assemblage des chambres est clos, ce qui évite les risques de contamination par l'extérieur. Ce dispositif, ou une sous-partie de celui-ci comprenant l'assemblage de chambres, peut notamment être réalisé sous forme d'un consommable fermé, simple de réalisation, à faible coût et jetable, qui serait inséré dans un appareil comprenant les composants coûteux et pérennes par exemple des composants optiques ou mécaniques comme une pompe ou les moyens mécaniques de précision pour le positionnement de l'aiguille.

Les dispositions selon l'invention permettent de plus de réaliser plusieurs prélèvements ou refoulements de liquide dans une même chambre lors d'un même protocole, le dispositif restant confiné. A titre d'exemple, une chambre de stockage unique peut comprendre un réactif qui sera prélevé par l'aiguille à diverses étapes d'un protocole. Le dispositif offre ainsi une souplesse dans la réalisation des protocoles biologiques qui permet d'adapter le dispositif à un grand nombre de protocoles distincts sans changements majeurs dans sa réalisation.

Selon un premier mode de réalisation, le volume de transfert est agencé pour transférer une quantité de fluide vers des moyens de traitements en aval du dispositif. Ces dispositions permettent de réaliser une préparation simple d'un échantillon, puis de transmettre le résultat de la préparation à un module de traitement situé en aval du dispositif. L'aval du dispositif correspond à des équipements externes, exploitant le produit du protocole biologique réalisé par le dispositif.

Selon un second mode de réalisation, le dispositif comprend, en aval des moyens d'aspiration et/ou de refoulement et en amont de l'aiguille et du volume de transfert une chambre réactionnelle et/ou des moyens de détection susceptibles d'agir sur un échantillon biologique. Elle peut contenir un ou plusieurs des réactifs spécifiques nécessaires au déroulement du protocole: par exemple, anticorps de capture dans le cas d'un protocole de test de type dosage immunoenzymatique (ELISA).

Avantageusement, la partie du dispositif portant l'aiguille comprend une chambre de stockage de déchets réactionnels. Le dispositif est ainsi un ensemble auto contenu, c'est-à-dire qu'il contient à la fois l'aiguille et une chambre de stockage de déchets réactionnels, destiné à recevoir tous les produits non exploitables des réactions qui se déroulent dans les chambres réactionnelles. Il n'y a ainsi pas de risque de contamination entre ce dispositif consommable et l'appareil au sein duquel il est intégré. Une fois l'échantillon entré dans le dispositif, il n'y a donc plus de liens entre celui-ci et son environnement. Avantageusement, la chambre de stockage de déchets réactionnels est disposée en amont du compartiment de transfert.

Préféréntiellement, l'alignement de chambres est disposé dans la direction verticale. Une disposition verticale de l'ensemble de chambre permet de profiter des effets de la gravité lors des changements de gamme de volume du liquide.

Avantageusement, au moins une chambre présente une paroi de forme tronconique ou conique. La forme conique permet un positionnement efficace de l'aiguille selon l'axe du cône dans une chambre quel que soit le volume contenu dans celle-ci.

Selon des modes de réalisation particuliers de l'invention, le dispositif pourra comprendre l'une ou plusieurs des caractéristiques suivantes, prises isolément ou en combinaison :
- l'une au moins des chambres de l'ensemble de chambres comprend des éléments magnétiques pouvant être mis en mouvements sous l'effet d'un champ magnétique,
- le dispositif comprend des capteurs destinés à contrôler des paramètres physiques ou chimiques dans au moins l'une des chambres de l'ensemble de chambres, et/ou des actionneurs destinés à agir sur le contenu d'une chambre,
- l'aiguille est reliée à des capteurs et/ou des actionneurs,
- l'aiguille est agencée pour réaliser le prélèvement d'un échantillon,
- au moins une paroi latérale d'une chambre comprend un septum agencé pour permettre un prélèvement ou une introduction d'une quantité de fluide au moyen d'une seconde aiguille déplacée selon un axe transversal à l'axe d'alignement des chambres.

La présente invention a également pour objet un procédé de fabrication d'un ensemble de chambres de stockages et/ou de chambres réactionnelles utilisé dans un dispositif selon l'une des revendications précédentes, comprenant une première étape de fabrication d'un ensemble de corps de chambres dont la paroi comprend au moins une ouverture débouchant sur une face d'assemblage, puis une seconde étape d'assemblage des corps de chambres selon une direction d'alignement en insérant une feuille de septum entre deux corps de chambres adjacentes entre deux ouvertures afin de former des chambres de stockage ou des chambres réactionnelles.

Un tel procédé de fabrication permet de réaliser les chambres indépendamment les unes des autres, afin de pouvoir varier les dimensions et les types de chambres utilisés dans un même ensemble de chambres. A titre d'exemple, il est possible de prévoir plusieurs chambres réalisées dans différents matériaux.

Selon un mode de mise en oeuvre du procédé permettant de réaliser plusieurs dispositifs de façon simultanée, la première étape de fabrication comprend la fabrication d'un ensemble de plaques regroupant des corps de chambre de même type, puis une seconde étape d'assemblage de différentes plaques en insérant un septum entre les plaques. Une étape de découpe de l'assemblage de plaques transversalement au plan des septa permet de séparer des dispositifs individuels.

Ce procédé permet de réaliser une fabrication collective de chaque chambre spécialisée ou de chaque composant de type capteur ou actionneur associé à une chambre particulière.

Au cours du procédé, l'ensemble de chambres peut avantageusement être assemblé par collage ou par vissage.

Le procédé peut comprendre une étape d'intégration d'une aiguille dans l'assemblage de chambres.

### BREVE DESCRIPTION DES DESSINS

L'invention sera mieux comprise à l'aide de la description détaillée qui est exposée ci-dessous en regard du dessin annexé dans lequel :
La figure 1 est un schéma de principe du dispositif selon l'invention,
La figure 2 est une vue en perspective représentant un assemblage de différentes chambres et réservoirs,
La figure 3 est une vue en perspective éclatée d'un assemblage de différentes chambres et réservoirs dans le cas d'un dispositif avec trois types distincts de réservoirs,
La figure 4 est un schéma représentatif d'un autre assemblage de différentes chambres et réservoirs,
La figure 5 est un schéma de principe d'un second dispositif selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

### DESCRIPTION DETAILLEE

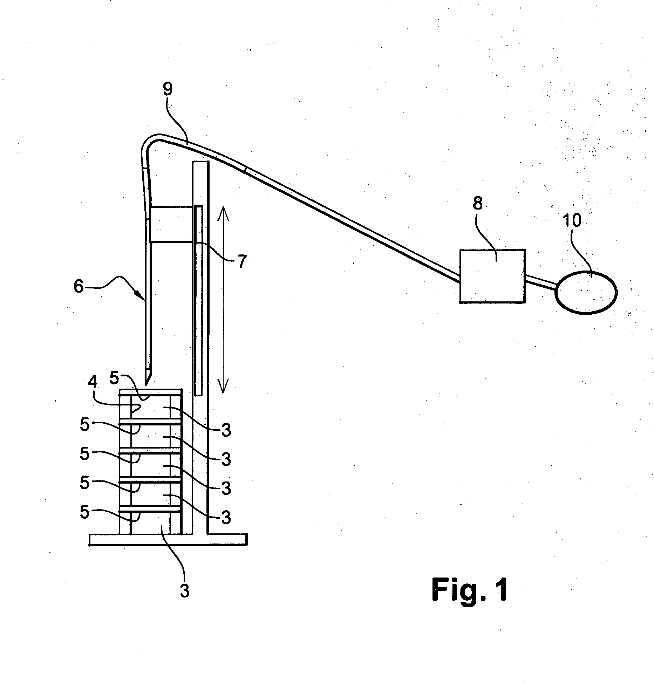

Selon un premier mode de réalisation représenté sur la figure 1, un dispositif destiné à la préparation d'échantillon ou à la réalisation de réactions biologiques selon l'invention comprend un assemblage 2 de chambres 3, ces chambres destinées à recevoir un fluide pouvant être des chambrés de stockage et/ou de chambres réactionnelles, les chambres étant délimitées par une paroi 4 de façon à constituer un ensemble de chambres adjacentes alignées verticalement.

Deux chambres 3 adjacentes sont séparées par une membrane étanche 5 ou septum.

Il est à noter que par chambre réactionnelle 3, il est entendu une enceinte dans laquelle ont lieux des « actions » sur l'échantillon à traiter, en particulier sur un échantillon biologique, notamment la réalisation de réactions ou de mélanges. Dans de nombreux protocoles biologiques, les réactions peuvent se dérouler directement dans les chambres de stockage et ainsi chambres réactionnelles et chambres de stockages sont alors confondues. Il est à noter également que le volume réactionnel peut être sensiblement constant ou variable au cours du protocole, par exemple en passant d'un volume de quelques ml en une dizaine de µl.

Le dispositif comprend une aiguille 6 permettant de transférer une quantité de fluide entre une première chambre 3 et une seconde chambre 3.

Une colonne micrométrique 7 permet l'entraînement en translation verticale de l'aiguille, afin de positionner l'extrémité de celle-ci dans une chambre déterminée en modifiant sa position verticale, l'aiguille pouvant transpercer les septa de séparation des chambres lors de ses déplacements.

Le dispositif comprend également une pompe 8 permettant l'aspiration et/ou le refoulement d'un liquide vers ou à partir du volume intérieur de l'aiguille 6 ou d'un volume de transfert relié à l'aiguille.

L'aiguille comprend un flexible 9 qui la relie à la pompe et constitue un volume de transfert d'une quantité de fluide entre deux chambres ou vers des moyens de traitements en aval du dispositif.

L'aiguille est reliée, en amont du volume de transfert constitué par l'aiguille et le flexible 9 et de la pompe, à une chambre 10 destinée a constituer un volume de stockage de déchets réactionnels également appelé volume « poubelle ». Cette chambre de stockage de déchets est destinée à recevoir des fluides issus du protocole.

Lors de la réalisation d'un protocole biologique, l'aiguille 6 est déplacée selon un axe de façon à traverser un ou plusieurs septa 3, puis à prélever un fluide dans une chambre 3, puis à se déplacer pour se positionner dans une autre chambre 3 et à déverser ou à prélever une quantité de fluide dans cette chambre. Un ensemble d'étapes de prélèvement et/ou de refoulement dans un ensemble de chambre est ainsi réalisé.

Le dispositif peut être facilement relié à un module exploitant le résultat du protocole biologique. Par exemple, l'aiguille prélève, dans la chambre réactionnelle 3 où a lieu la dernière étape d'un protocole biologique, un échantillon. Elle traverse ensuite un septum au fond de la chambre réactionnelle 3, et dépose l'échantillon sur une puce d'un module aval non représenté situé à l'extrémité du dispositif. Il est possible d'envisager d'autres types de connections, comme un cylindre dans lequel viendrait s'encastrer l'aiguille.

Par exemple dans le cas d'extraction d'ADN, il est possible de relier le dispositif à un module aval de détection par PCR quantitative qui amplifiera et/ou détectera l'ADN extrait.

Il est à noter que le dispositif permet de transférer un produit final du protocole biologique réalisé grâce à ce dispositif à un module aval traitant une gamme de volume d'échantillon différente de celle traitée dans le protocole biologique réalisé grâce au dispositif. A titre d'exemple, si le protocole biologique assure une augmentation de concentration d'un facteur 1000, le module aval traitera un volume d'échantillon 1000 fois inférieur à celui traité par le dispositif.

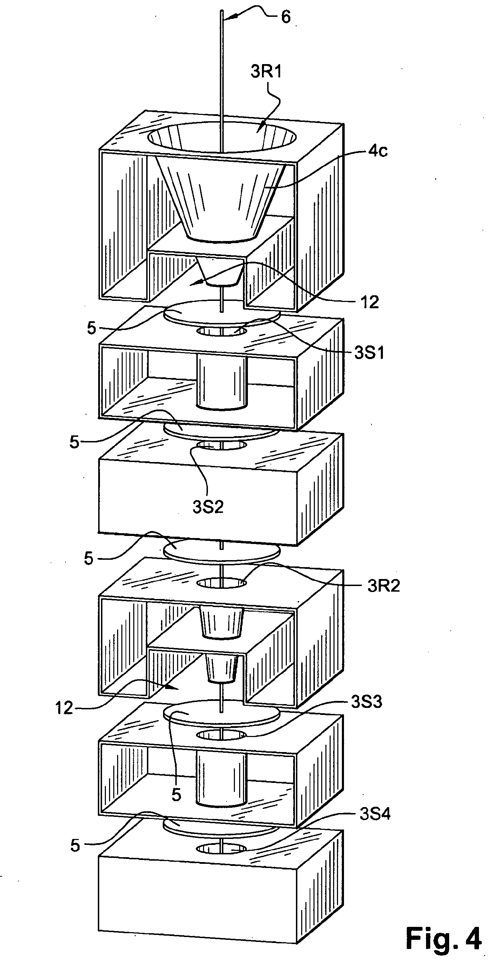

Selon une variante du dispositif destinée à une application particulière correspondant au traitement de protocoles biologiques nécessitant l'emploi de billes magnétiques également appelées particules magnétiques, au moins l'une des chambres comprend des billes magnétiques non représentées pouvant être mises en mouvement sous l'effet d'un champ magnétique. Dans ce type de protocole, il convient d'assurer la réalisation de deux fonctions principales correspondant à la capture de ces billes et à leur resuspension. La capture des billes peut être réalisée par un aimant, de type aimant permanent ou électroaimant, qui est approché de la chambre réactionnelle 3 par une fenêtre d'accessibilité 12 du type représentée sur la figure 4 dans un exemple d'assemblage de chambres. Dans le cas d'une chambre réactionnelle 3 de grand volume, il est possible d'intégrer parallèlement à la chambre un barreau de fer doux et d'entourer cette chambre d'une bobine. Le gradient de champ magnétique ainsi formé permet une pré-concentration de l'échantillon dans une zone de la chambre réactionnelle. La resuspension des billes magnétiques est réalisée à l'aide de l'aiguille 6 reliée à la pompe 8. Des mouvements d'aspiration et de refoulement des fluides permettent une resuspension efficace. Cette même méthode peut aussi être utilisée pour homogénéiser une solution.

Selon une variante de réalisation du premier mode de réalisation représentée sur la figure 4, une chambre 3 présente une paroi 4c de forme tronconique ou conique.

Selon une autre variante, l'aiguille est agencée pour réaliser également le prélèvement d'un échantillon. A titre d'exemple, il est ainsi possible de réaliser un prélèvement de sang par seringue, puis d'utilisation la seringue et son aiguille comme l'ensemble formé de l'aiguille et de la pompe du dispositif décrit précédemment, en utilisant par exemple un pousse-seringue pour réaliser et contrôler les déplacements de fluides.

Selon une autre variante de réalisation, le dispositif comprend des capteurs destinés à contrôler des paramètres physiques ou chimiques relatifs au protocole biologique qui sont disposés dans ou à proximité d'au moins l'une des chambres et/ou des actionneurs destinés à agir sur le contenu d'une chambre pour assurer le bon déroulement du protocole biologique.

A titre d'exemples non exhaustifs, des capteurs optiques, électriques, chimiques, tels que des capteurs de niveau, de fluorescence, de température peuvent être utilisés.

En ce qui concerne les actionneurs, ceux-ci peuvent être situés à l'extérieur de la chambre réactionnelle ou de stockage, et agir à distance via une fenêtre d'accessibilité comme un dispositif de chauffage, un module d'agitation piézoélectrique, un aimant, une sonde ultrasons utilisée pour lyser des bactéries, ou encore être directement intégrés à la chambre réactionnelle ou au réservoir lors de la fabrication.

Selon une autre variante de réalisation, l'aiguille est reliée à des capteurs destinés à contrôler des paramètres physiques ou chimiques relatifs au protocole biologique et/ou des actionneurs destinés à agir sur le contenu d'une chambre pour assurer le bon déroulement du protocole biologique. De tels capteurs ou actionneurs peuvent être directement fixés sur l'aiguille, ou être disposés entre l'aiguille et le dispositif de pompage. Dans un tel cas, on définira tous les éléments situés entre l'aiguille et le dispositif de pompage comme étant le module aiguille. On en trouvera un exemple de réalisation dans le second mode de réalisation.
A titre d'exemples non exhaustifs, un contrôleur de débit, un testeur d'humidité permettant de déterminer si une chambre est vide, une sonde de pH, ou tout autre système de mesure électrochimique peuvent être utilisés comme capteurs. On trouvera des exemples d'aiguilles reliés à des capteurs dans le document "Microfabricated Needle-Type Sensors for pO2, pCO2, and pH. Xiaowen Wang, Hiroaki Suzuki, Katsuyoshi Hayashi, Takashi Kaneko, and Kenji Sunagawa. IEEE SENSORS JOURNAL, VOL. 6, NO. 1, FEBRUARY 2006"

Toujours à titre d'exemples non limitatifs, des moyens de chauffage pour le chauffage d'une solution, une sonotrode reliée à des transducteurs ultrasons pour la lyse de bactérie, ou un module piézoélectrique, destiné à être disposé à l'extrémité de l'aiguille pour réaliser une éjection des gouttes utile pour la liaison avec un module aval, constituent des types d'actionneurs pouvant être intégrés à l'aiguille ou au module aiguille.

En ce qui concerne la constitution des chambres 3 de stockage ou réactionnelles, les parois 4 de celle-ci peuvent être fabriquées par usinage ou moulage à partir de différents matériaux. Ceux-ci sont préférentiellement des plastiques pouvant être par exemple le polycarbonate, le polyéthyléthercétone (PEEK), le polytétrafluoroéthylène (PTFE), le polypropylène, le polydimethylsiloxane (PDMS), le polyéthylène (PE), cyclooléfinecopolymère (CCC). Des métaux, par exemple de l'inox, de l'aluminium ou du nickel peuvent également être utilisés, ainsi que du verre ou de la céramique. En vue d'une miniaturisation plus poussée avec un module aval, une réalisation en silicium est également possible. Certaines applications nécessitent l'utilisation de matériaux étanches aux gaz, notamment à la vapeur d'eau. Dans ce cas, on choisira préférentiellement des matériaux étanches aux gaz et à la vapeur d'eau.

Un traitement hydrophobe de la paroi des chambres peut être réalisé de manière à ce que le liquide contenu dans la chambre ne se répartisse pas sur l'ensemble des parois, ceci afin de faciliter le prélèvement de petits volumes avec l'aiguille.

Les septa 5 peuvent être notamment fabriqués en élastomères, tels que le Viton ^{®}, le polybutylène, le PDMS, ou encore un matériau de la famille des silicones. Leur épaisseur varie en général entre 100 et 1000 µm.

L'aiguille 6 utilisée pour transpercer les septa est de préférence en métal, notamment en acier inoxydable ou dans un alliage de laiton et de nickel. Son extrémité est biseautée de façon à pouvoir transpercer facilement les septa. Son diamètre et ses dimensions sont adaptés au protocole suivi.

Différents types de pompe 8 peuvent être utilisés, en particulier des pompes péristaltiques, pompes à membranes ou un dispositif du type pousse-seringue. L'utilisation d'un pousse seringue permet de constituer un ensemble comprenant la pompe et l'aiguille à partir d'une seringue.

En ce qui concerne les réactifs nécessaires aux protocoles de préparation d'échantillon, ceux-ci peuvent être stockés sous forme liquide, les septa assurant l'étanchéité des chambres et évitant ainsi leur évaporation, sous forme séchée, mais aussi sous forme lyophilisée. Il est alors possible de prélever du solvant avec l'aiguille, dans une chambre de stockage dédiée à cet effet, et de s'en servir pour solubiliser les réactifs. Le tampon dans lequel est contenu l'échantillon biologique peut aussi réaliser cet office. Cette action peut être réalisée au moment de l'utilisation, et permet donc un stockage aisé des réactifs et du dispositif les contenant.

Différentes méthodes de fabrication sont envisageables pour le dispositif selon l'invention afin d'exploiter la modularité de ce dispositif.

Selon un premier mode de mise en oeuvre, la fabrication d'un ensemble de chambres de stockages et/ou de chambres réactionnelles utilisé dans un dispositif tel que décrit précédemment comprend une première étape de fabrication d'un ensemble de corps de chambres 22 dont la paroi est ouverte sur au moins un côté.

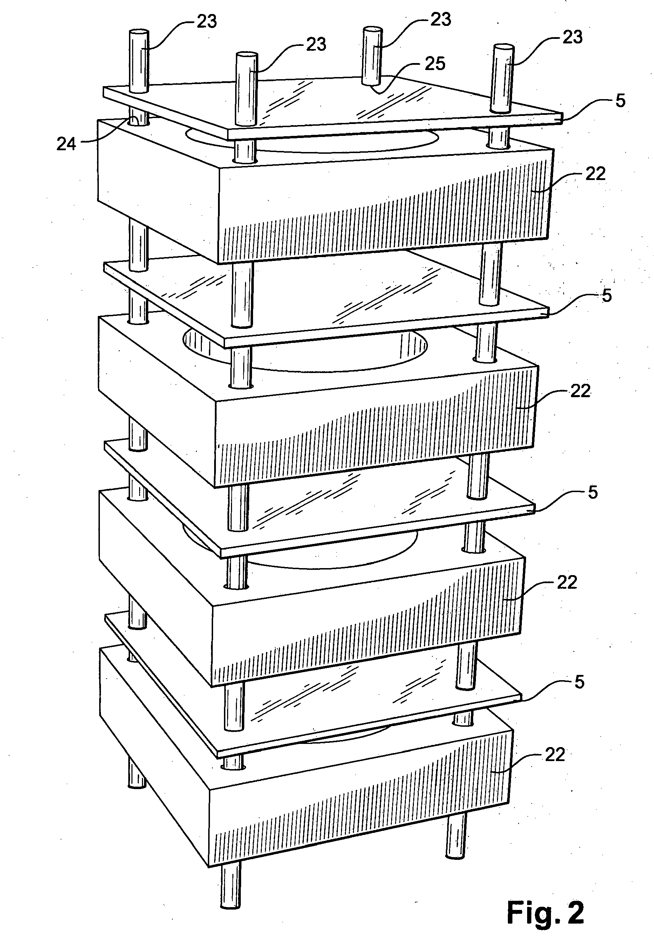

Dans une seconde étape, un assemblage des chambres selon une direction d'alignement est réalisé en insérant une feuille de septum 5 entre deux chambres adjacentes, et entre deux ouvertures. Comme représenté sur la figure 2, l'ensemble de chambres peut être assemblé par vissage, des vis 23 étant reçues dans des alésages 24 des corps de chambre 22 et des ouvertures 25 des feuilles de septum 5. Les vis 23 permettent de serrer les différents corps de chambre 22 entre eux. Le nombre de chambres et leur type sont choisis en fonction du protocole biologique à traiter.

Selon une variante, l'ensemble de chambres peut être assemblé par collage, par exemple selon la méthode exposée dans le document FR2856047.

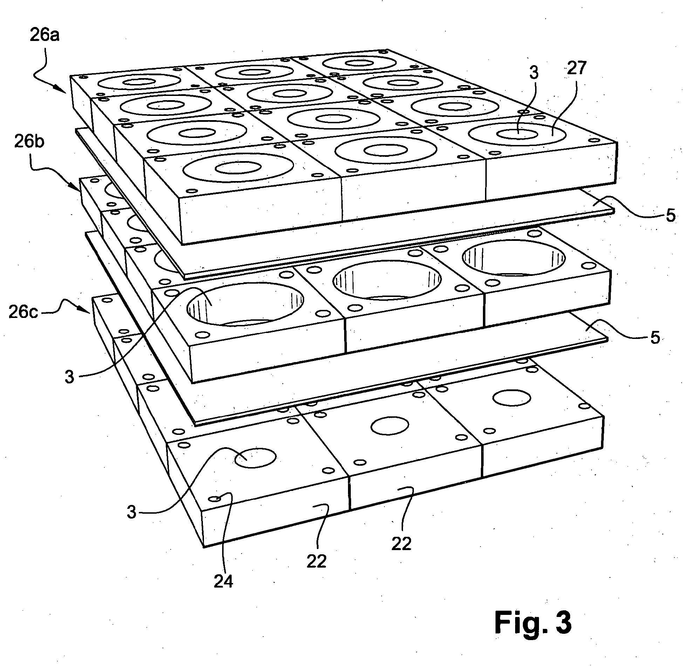

Selon un second mode de mise en oeuvre, une fabrication collective d'une pluralité de dispositifs est réalisée. Dans ce cas, dans une première étape, la fabrication d'un ensemble de plaques 26a, 26b, 26c regroupant des corps de chambres 22 de même type ou des plaques regroupant des composants de type capteur ou actionneur est réalisée, puis dans une seconde étape, ainsi que représenté sur la figure 3 un assemblage de différentes plaques 26a, 26b, 26c est réalisé en insérant une feuille de septum 5 entre les plaques.

Selon l'exemple présenté sur la figure 3, des alésages 24 sont percés dans les plaques pour permettre une fixation par vis de chaque corps de chambre 22. Il est à noter également que la plaque supérieure 26a comprend un ensemble de chambre autour de laquelle est rapportée une résistance chauffante 27.

Dans une troisième étape, il est ensuite possible de procéder à une découpe de l'assemblage transversalement au plan des septa de façon à séparer des dispositifs individuels.

Selon une variante, le procédé comprend une étape d'intégration d'une aiguille dans l'ensemble de chambres lors de sa fabrication, réalisant ainsi un ensemble hermétique et non démontable. Il suffit alors de la relier à la pompe lors de l'insertion du dispositif dans l'appareil contenant l'instrumentation. Cette disposition évite des phénomènes de contamination par des échantillons biologiques et optimise la réutilisabilité de l'ensemble constitué par le dispositif et de l'appareil de traitement destiné à recevoir le dispositif.

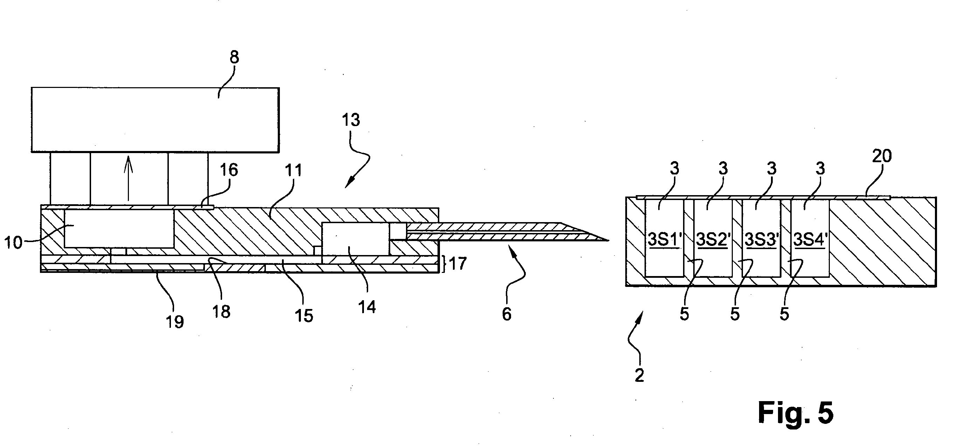

Selon un second mode de réalisation du dispositif représenté sur la figure 5, une fonction de détection est intégrée au dispositif. En particulier, le dispositif comprend des réactifs de type anticorps de capture greffés à l'intérieur de l'aiguille intervenant dans un protocole de test du type dosage immunoenzymatique (ELISA).

Ainsi, le dispositif comprend un module de prélèvement ou module aiguille 13 comportant une aiguille 6, une chambre de stockage intermédiaire 14 reliée à l'aiguille faisant office de compartiment de transfert, un canal fluidique 15 relié à la chambre de stockage intermédiaire 14, et une chambre 10 de stockage de déchets réactionnels à l'extrémité du canal fluidique opposé à la chambre de stockage intermédiaire 14: Le canal fluidique 15 est fonctionnalisé par greffage d'anticorps de capture du test. Des capteurs sous formes d'électrodes 18 permettent de constater les résultats du test.

La chambre 10 de stockage de déchets réactionnels est fermée par un filtre hydrophobe 16 ou une membrane déformable étanche. Le module aiguille 13 est assemblé à la pompe 8 au niveau du filtre hydrophobe 16, le pompage et le refoulement dans le module de prélèvement étant réalisés par application d'une dépression ou d'une pression sur ou à travers la membrane 16 par une pompe 8.

Le dispositif comprend également un assemblage 2 de chambres de stockage 3 alignées selon un axe horizontal contenant les réactifs embarqués, séparés par des septa 5.

Avantageusement, le module aiguille comprend une carte fluidique plastique 11, pouvant notamment être réalisée en polyéthylène (PE) ou en cyclooléfinecopolymère (COC) dans laquelle sont ménagés le canal fluidique 15, la chambre de stockage intermédiaire 14 et la chambre de stockage de déchets 10. La chambre de stockage intermédiaire 14 et le canal fluidique 15 sont fermés par operculage de la carte avec une feuille de kapton 17 comportant des dépôts métalliques 18 pour les électrodes de mesure électrochimique et les reprises de contact 19 pour connecter ces électrodes à l'instrumentation de mesure. Le canal fluidique est fonctionnalisé par greffage des anticorps de capture du test ELISA considéré avant operculage par la feuille de kapton. Dans ce mode de réalisation, le module aiguille 13 est obtenu en insérant l'aiguille (6) dans la carte fluidique 11. L'aiguille 6 constitue donc l'interface entre ce module aiguille 13 et l'assemblage 2 de chambres de stockages. L'assemblage 2 de chambres de stockage 3 est composé d'une barrette de cuves obtenue par moulage de PDMS, selon le procédé de polymérisation sur moule connue de l'homme de l'art. Les cloisons entre les chambres, dont l'épaisseur est de l'ordre de 500µm, font office de septa. Les chambres sont fermées par un filtre hydrophobe 20. Alternativement, le filtre pourrait être remplacé par une membrane élastique de façon à absorber les modifications de volume dans la chambre poubelle.

Selon une variante, au moins une paroi latérale d'une chambre comprend un septum agencé pour permettre un prélèvement ou une introduction d'une quantité de fluide au moyen d'une seconde aiguille déplacée selon un axe transversal à l'axe d'alignement des chambres.

Selon une autre variante non représentée, il est possible d'envisager l'utilisation de plusieurs aiguilles et de pompes distinctes reliées à ces différentes aiguilles.

### EXEMPLES

Deux exemples de réalisation de l'invention en lien avec deux applications spécifiques de celles-ci sont décrits ci-dessous, correspondant respectivement au premier et au second mode de réalisation de l'invention décrits ci-dessus.

### Exemple 1 : Module de préparation d'échantillon biologique

Ce premier exemple se rapporte au premier mode de réalisation précédemment décrit du dispositif selon l'invention. Ce dispositif est utilisé pour la préparation d'échantillon biologique, pour un volume d'échantillon initial de 2 à 10 ml et un volume de sortie de l'ordre de 10 µL, soit une concentration par un facteur 1000. Le protocole biologique exploité s'applique à un échantillon contenant des bactéries, dont l'acide nucléique sera extrait et concentré. Le produit de cette extraction et de cette concentration est ensuite traité par un module de PCR relié au dispositif, qui permet la détection et l'identification des bactéries initiales présentes dans l'échantillon.

### 1.1 Description du dispositif

L'assemblage de chambre 2, représenté sur la figure 4 est un assemblage vertical comprenant deux chambres réactionnelles 3R1, 3R2 et quatre chambres de stockage 3S1, 3S2, 3S3, 3S4. Les chambres sont usinées dans des cubes de polycarbonate de 4 x 4 cm de coté et d'épaisseur variable en fonction de leur rôle. Les chambres de stockage 3S1, 3S2, 3S3, 3S4 consistent chacune en un cylindre de 6 mm de diamètre pour 15 mm de haut contenant un volume de 180 µl. Un traitement de surface est effectué de façon à rendre les parois des chambres hydrophobes.

Les deux chambres réactionnelles 3R1, 3R2 traitent des échantillons de volumes différents. Dans la première chambre réactionnelle 3R1 un échantillon de 10 ml est traité, puis son volume est réduit à 50 µl. La paroi 4c de la chambre réactionnelle 3R1 présente une forme tronconique dont le plus grand diamètre est de l'ordre de 3 cm, et le plus petit diamètre est de l'ordre de 4 mm, afin de s'adapter aux variations de volume.

La seconde chambre réactionnelle 3R2 est agencée pour traiter un échantillon de 250 µl dont le volume est ensuite réduit à 10 µl. Cette seconde chambre 3R2 présente également une forme tronconique de diamètre inférieur à celui de la première chambre. Une fenêtre d'accessibilité 12 aménagée sur le coté des chambres réactionnelles 3R1, 3R2 permet d'approcher des actionneurs nécessaires au bon déroulement du protocole biologique, notamment des moyens de chauffage ou un aimant permettant la capture de billes magnétiques présentent dans les chambres réactionnelles 3R1, 3R2.

Les septa 5 séparant les chambres adjacentes sont constitués par des disques de Viton ^{®} de 0.75 mm d'épaisseur. Les différentes chambres sont fabriquées séparément, puis assemblées par vissage avec un septum entre deux chambres adjacentes.

L'aiguille 6 est un modèle en alliage laiton/nickel dont la gauge est de 18 et la longueur est de 20 cm. Avec une aiguille de gauge 18, d'un diamètre interne de 0.8 mm et d'un diamètre externe de 1.27 mm, le volume de l'aiguille est d'environ 75 µl. Ce volume est suffisant pour stocker les liquides lors d'un transfert d'une chambre vers une autre dans le protocole décrit ci-après.

L'aiguille 6 est montée sur une colonne micrométrique 7 pilotée sur l'axe vertical avec une précision de positionnement de 100 µm, afin de garantir une bonne précision lors du prélèvement des liquides par l'aiguille et donc une bonne répétitivité. La vitesse de déplacement maximale est de l'ordre de 20 mm/s. En particulier, une colonne micrométrique du type Axe Micos VT-75-200-SM contrôlée par une interface du type RS232 peut être utilisée.

L'aiguille 6 est reliée à une pompe péristaltique 8 dont le débit peut varier entre 100 µl/min et 15 ml/min. En particulier une pompe péristaltique du type IPC-N de la société ISMATEC peut être utilisée. Un réservoir de stockage de déchets 10 est situé en sortie de cette pompe péristaltique.

### 1.2 Mise en oeuvre

Dans une première étape, l'échantillon initial (2 à 10 ml) est mélangé dans la première chambre réactionnelle 3R1 à des billes magnétiques fonctionnalisées sur lesquelles interagiront les espèces recherchées dans ledit échantillon. Ce mélange est réalisé grâce à l'aiguille 6 positionnée dans cette chambre qui aspire puis rejette le liquide. Les billes magnétiques sont capturées grâce à un aimant placé dans la fenêtre d'accessibilité 12 de la chambre réactionnelle 3R1. Le liquide de la chambre est transféré dans le réservoir de stockage de déchets 10, située en sortie de la pompe 8 reliée à l'aiguille 6 et la chambre réactionnelle 3R1 est vidée à l'exception des billes.

Dans une seconde étape, une quantité de 50 µl de réactif est ensuite transférée de la première chambre de stockage 3S1 vers la chambre réactionnelle 3R1. Les billes sont re-suspendues dans ce réactif en utilisant l'aiguille 6 et la pompe 8 qui réalisent des opérations d'aspiration et de refoulement successives. Une nouvelle capture des billes sur lesquelles le réactif à agi est réalisée par l'aimant, le liquide de la chambre réactionnelle 3R1 est transféré dans le réservoir de stockage de déchets 10.

Dans une troisième étape, un nouveau réactif est amené dans la chambre réactionnelle 3R1 depuis la seconde chambre de stockage 3S2 par l'aiguille 6. La durée d'incubation pour les différentes réactions peut s'étendre jusqu'à 10 minutes. Une nouvelle capture des billes sur lesquelles le réactif à agi est réalisée par l'aimant.

Dans une quatrième étape, le surnageant est aspiré par l'aiguille 6 et injecté dans la seconde chambre réactionnelle 3R2, dans laquelle sont contenus 200 µL de tampon avec des billes magnétiques. L'aiguille 6 assure un mélange homogène des 250 µL présents dans la chambre réactionnelle 3R2. Les billes magnétiques sont capturées grâce à un aimant placé dans la fenêtre d'accessibilité 12 de la chambre réactionnelle 3R2. Le liquide de la chambre est transféré dans le réservoir de stockage de déchets 10.

Dans une cinquième étape, une quantité de 50 µl de réactif est ensuite transférée de la troisième chambre de stockage 3S3 vers la chambre réactionnelle 3R2. Les billes sont re-suspendues dans ce réactif, puis capturées avec l'aimant, le surnageant étant ensuite évacué dans le réservoir de stockage de déchets 10. Cette étape peut être renouvelée 2 fois.

La sixième et dernière étape consiste à resuspendre les billes dans 10 µL de tampon d'élution pour le relargage dans le surnageant des espèces recherchées, prélevés dans la quatrième chambre de stockage 3S4, à les capturer avec l'aimant, et à récupérer les 10 µL de surnageant avec l'aiguille 6.

L'aiguille 6 traverse ensuite tout le dispositif et dépose ce volume sur un module d'amplification / détection non représenté dans lequel à lieu la PCR.

### Exemple 2 : automatisation d'un test immunologique

Le second exemple se rapporte au second mode de réalisation précédemment décrit du dispositif selon l'invention. Ce dispositif est utilisé pour l'automatisation d'un test immunologique sur du sang total, sur le lieu du prélèvement. Le protocole biologique, destiné à déterminer la concentration d'un antigène particulier présent dans le sang analysé, est un protocole classique ELISA, avec détection électrochimique du produit de la révélation enzymatique dans un canal comprenant un système d'électrodes de mesure.

### 2.1 Description du dispositif

Le dispositif est constitué de la façon indiquée en référence à la figure 5 pour le second mode de réalisation. Ce dispositif comprend un module de prélèvement 13 et un assemblage 2 de chambres de stockage 3 alignées selon un axe horizontal contenant les réactifs embarqués, séparés par des septa 5. L'assemblage comprend quatre chambres de stockage de réactifs 3S1', 3S2', 3S3', 3S4'.

Le module de prélèvement 13 est utilisé pour prélever du sang hépariné dans un tube sous vide, puis le dispositif est destiné à être positionné dans un appareil muni de moyen de déplacements relatifs du module de prélèvement 13 par rapport à l'assemblage 2.

### 2.2 mise en oeuvre du protocole biologique

Dans une première étape, un prélèvement d'un échantillon est réalisé. Le module aiguille 13 est utilisé pour prélever du sang hépariné dans un tube sous vide, par exemple du type connu sous la marque Vacutainer. Un prélèvement de 10 µL de sang à 100 µL/min est effectué. Le sang remplit alors le volume interne de l'aiguille 6 et une partie de la chambre intermédiaire 14, dont le volume interne est de 10µl.

Dans une seconde étape, une interaction entre l'échantillon et le conjugué de marquage est réalisée. A cet effet, le module aiguille 13 est aligné avec l'assemblage 2 de chambres 3 dans un appareil muni de moyen de déplacement relatifs du module de prélèvement 13 par rapport à l'assemblage 2. Le premier septum 5 ou cloison est perforé par déplacement relatif de l'assemblage 2 par rapport au module aiguille 13 pour que l'aiguille 6 accède au contenu de la première chambre de stockage 3S1' contenant 40µl de tampon de marquage. Le tampon de marquage est une solution contenant des conjugués de marquage formés par couplage chimique d'un anticorps secondaire reconnaissant un épitope spécifique de l'antigène recherché et de molécules d'enzyme phosphatase alcaline (PAL). Un refoulement du sang dans la première chambre 3S1' est réalisée, puis des mouvements d'aller-retour dans l'aiguille, à 100 µL/min avec une amplitude de 15 µL pendant deux minutes pour homogénéiser le mélange sang / conjugué.

Dans une troisième étape, une incubation de complexes antigènes / conjugué est réalisée dans le canal 15. Le canal 15 comprend des anticorps de capture, reconnaissant un second épitope spécifique de l'antigène recherché. Ces anticorps ont été greffés sur la surface du canal 15 réservé dans la carte fluidique 11 par une technique d'adsorption connue de l'homme de l'art. Une quantité de 40 µL du mélange de la chambre 3S1' est aspirée dans le canal fluidique 15 à un faible débit de l'ordre de 10 µL/min. Des complexes immuns anticorps de capture / antigènes / anticorps secondaires couplés à la PAL sont formés.

Dans une quatrième étape, des lavages sont réalisés. L'assemblage 2 est déplacé par rapport au module de prélèvement 13 pour que l'aiguille 6 accède au contenu de la seconde chambre de stockage 3S2' contenant un tampon de lavage. Le tampon de lavage est aspiré à un débit de 10 µL/min jusqu'à une quantité de 50 µL. L'assemblage 2 est déplacé par rapport au module de prélèvement 13 pour que l'aiguille 6 accède au contenu de la troisième chambre de stockage 3S3' contenant un second tampon de lavage. Le tampon de lavage est aspiré à un débit de 100 µL/min jusqu'à une quantité de 500 µL.

Dans une cinquième étape, une révélation puis une lecture du signal sont réalisées. L'assemblage 2 est déplacé par rapport au module de prélèvement 13 pour que l'aiguille 6 accède au contenu de la quatrième chambre de stockage 3S4' contenant un mélange de révélation enzymatique constitué par un tampon contenant le substrat PAPP (Para-aminophenyl phosphate, substrat de la phosphatase alcaline de la PAL). Le tampon de lavage est aspiré à un débit de 100 µL/min jusqu'à une quantité de 40 µL. Une lecture chrono-ampérométrique sur les électrodes 18 permet de mesurer l'accumulation de PAP (Para-aminophenol, produit de la déphosphorylation du PAPP de la PAL) dans le canal, à un potentiel oscillant de - 0.2 /0.2 V pendant deux fois 1 seconde.

Cette invention décrit donc un dispositif d'adressage fluidique compact, dédié au traitement de protocoles biologiques complexes et d'une grande souplesse, qui peut trouver des applications dans des domaines variés. Les possibilités de réalisation couvrent une large gamme de protocoles, allant de la préparation d'échantillon en vue d'une exploitation sur un autre module relié, à des protocoles complets car il est par exemple possible de réaliser le cyclage en température nécessaire à une PCR via ce dispositif.

Les spécificités de ce dispositif compact, robuste et transportable le destinent tout particulièrement à une utilisation in situ. Intégré dans un appareil adéquat, il permet alors de déporter la réalisation des protocoles au plus près des besoins.

Naturellement, les microsystèmes pour la chimie et la biologie, communément appelés Laboratoire sur Puce (LOC) ou MicroSystème d'Analyse Totale (µTAS) pourront bénéficier de cette invention pour tous les cas où il est nécessaire de préparer un échantillon biologique d'échelle macroscopique en amont de la détection, qui elle aurait lieu sur le microsystème. Ce dispositif est en effet conçu pour pouvoir être facilement relié à un module aval opérant à une échelle de volume différente.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de préparation, de traitement et/ou d'analyse d'un échantillon biologique comprenant :
- un ensemble (2) de chambres (3) de stockage et/ou réactionnelles destinées à recevoir un fluide , lesdites chambres (3) possédant des parois (5) communes ou adjacentes de façon à constituer un ensemble de chambres (3) adjacentes alignées selon un axe donné, tel qu'au moins une desdites parois (5) comporte une membrane ou septum, cette membrane étant susceptible d'être transpercée par une aiguille puis de recouvrer son étanchéité une fois l'aiguille retirée, le ou les septums constituant la ou les paroi(s) étant située(s) dans un plan traversé par l'axe d'alignement des chambres, characterisé par
- des moyens de déplacement dudit fluide à partir et/ou vers au moins l'une desdites chambres (3) de l'ensemble (2), lesdits moyens de déplacement comprenant :
o une aiguille (6) reliée à un compartiment de transfert (9, 14),
o des moyens d'aspiration/refoulement (8) dudit liquide reliés à l'aiguille en amont de celle-ci et de façon séparée du volume des chambres de l'ensemble (2), et
o des moyens d'entraînement (7) agencés pour déplacer en translation l'un par rapport à l'autre l'aiguille (6) et l'ensemble (2) de chambres (3) selon l'axe d'alignement des chambres (3).

2. Dispositif selon la revendication 1, dans lequel le compartiment de transfert (9) est agencé pour permettre le transfert d'une quantité de fluide vers des moyens de traitements en aval du dispositif.

3. Dispositif selon l'une des revendications précédentes comprenant, en aval des moyens (8) d'aspiration/refoulement et en amont de l'aiguille (6) et du compartiment de transfert (14) une chambre réactionnelle et/ou des moyens de détection (15) susceptibles d'agir sur un échantillon biologique.

4. Dispositif selon l'une des revendications précédentes, dans lequel la partie du dispositif portant l'aiguille comprend une chambre (10) de stockage de déchets réactionnels.

5. Dispositif selon la revendication 4, dans lequel la chambre (10) de stockage de déchets réactionnels est disposée en amont du compartiment de transfert (9, 14).

6. Dispositif selon l'une des revendications précédentes, dans lequel au moins une chambre (3) présente une paroi (4c) de forme tronconique ou conique.

7. Dispositif selon l'une des revendications précédentes, dans lequel l'alignement de chambres (3) est disposé dans la direction verticale.

8. Dispositif selon l'une des revendications précédentes, dans lequel au moins l'une des chambres (3) de l'ensemble de chambres comprend des éléments magnétiques pouvant être mis en mouvement sous l'effet d'un champ magnétique.

9. Dispositif selon l'une des revendications précédentes, comprenant des capteurs destinés à contrôler des paramètres physiques ou chimiques dans au moins l'une des chambres de l'ensemble de chambres, et/ou des actionneurs destinés à agir sur le contenu d'une chambre.

10. Dispositif selon l'une des revendications précédentes dans laquelle l'aiguille (6) est reliée à des capteurs et/ou des actionneurs.

11. Dispositif selon l'une des revendications précédentes, dans lequel l'aiguille (6) est agencée pour réaliser le prélèvement d'un échantillon.

12. Dispositif selon l'une des revendications précédentes, dans lequel au moins une paroi latérale d'une chambre (3) comprend un septum (5) agencé pour permettre un prélèvement ou une introduction d'une quantité de fluide au moyen d'une seconde aiguille (6) déplacée selon un axe transversal à l'axe d'alignement des chambres (3).

13. Procédé de fabrication d'un ensemble de chambres de stockages et/ou de chambres réactionnelles utilisé dans un dispositif selon l'une des revendications précédentes, comprenant une première étape de fabrication d'un ensemble de corps de chambres (22) dont la paroi (4) comprend au moins une ouverture débouchant sur une face d'assemblage, puis une seconde étape d'assemblage des corps de chambres (22) selon une direction d'alignement en insérant une feuille de septum (5) entre deux corps de chambre adjacents (22) entre deux ouvertures afin de former des chambres (3) de stockage ou des chambres réactionnelles.

14. Procédé selon la revendication 13, dans lequel la première étape de fabrication comprend la fabrication d'un ensemble de plaques (26a, 26b, 26c) regroupant des corps de chambre (22) de même type, puis une seconde étape d'assemblage de différentes plaques (26a, 26b, 26c) en insérant une feuille de septum (5) entre les plaques (26a, 26b, 26c).

15. Procédé selon la revendication 14 comprenant une étape de découpe de l'assemblage de plaques (26a, 26b, 26c) transversalement au plan des septa (5) de façon à séparer des dispositifs individuels.

16. Procédé selon l'une des revendications 13 à 15, dans lequel l'ensemble de chambres (3) est assemblé par collage.

17. Procédé selon l'une des revendications 13 à 15, dans lequel l'ensemble de chambres (3) est assemblé par vissage.

18. Procédé selon l'une des revendications 13 à 17, comprenant une étape d'intégration d'une aiguille (6) dans l'assemblage de chambres (2).

## Patentansprüche

1. Vorrichtung zur Herstellung, Verarbeitung und/oder Analyse einer biologischen Probe, umfassend:
- eine Einheit (2) von Speicher- und/oder Reaktionskammern (3), die ausgelegt sind, um ein Fluid aufzunehmen, wobei die Kammern (3) über gemeinsame oder benachbarte Wände (5) verfügen, um eine Einheit von benachbarten Kammern (3) zu bilden, die gemäß einer gegebenen Achse ausgefluchtet sind, so dass mindestens eine der Wände (5) eine Membran oder ein Septum umfasst, wobei diese Membran von einer Nadel durchstochen werden und dann ihre Dichtigkeit wiedererlangen kann, nachdem die Nadel zurückgezogen wurde, wobei das Septum oder die Septa die Wand oder die Wände bilden, die sich auf einer Ebene befinden, die von der Ausfluchtungsachse der Kammern durchquert wird, **gekennzeichnet durch**
- Mittel zur Verschiebung des Fluids von und/oder in Richtung mindestens einer der Kammern (3) der Einheit (2), wobei die Mittel zur Verschiebung Folgendes umfassen:
-- eine Nadel (6), die mit einem Übertragungsabteil (9, 14) verbunden ist,
-- Mittel zum Ansaugen/Zurückdrängen (8) der Flüssigkeit, die mit der Nadel vorgelagert von dieser und getrennt vom Volumen der Kammern der Einheit (2) verbunden sind, und
-- Antriebsmittel (7), die angeordnet sind, um in Translation mit Bezug aufeinander die Nadel (6) und die Einheit (2) von Kammern (3) gemäß der Ausfluchtungsachse der Kammern (3) zu verschieben.

2. Vorrichtung nach Anspruch 1, wobei das Übertragungsabteil (9) angeordnet ist, um die Übertragung einer Menge von Fluid hin zu Verarbeitungsmitteln nachgelagert von der Vorrichtung zu ermöglichen.

3. Vorrichtung nach einem der vorhergehenden Ansprüche, umfassend, nachgelagert von den Mitteln (8) zum Ansaugen/Zurückdrängen und vorgelagert von der Nadel (6) und dem Übertragungsabteil (14), eine Reaktionskammer und/oder Mittel zum Nachweis (15), die auf eine biologische Probe wirken können.

4. Vorrichtung nach einem der vorhergehenden Ansprüche, wobei der Teil der Vorrichtung, der die Nadel trägt, eine Kammer (10) zum Speichern von Reaktionsabfällen umfasst.

5. Vorrichtung nach Anspruch 4, wobei die Kammer (10) zum Speichern von Reaktionsabfällen vorgelagert vom Übertragungsabteil (9, 14) angebracht ist.

6. Vorrichtung nach einem der vorhergehenden Ansprüche, wobei mindestens eine Kammer (3) eine Wand (4c) in Kegelstumpf- oder konischer Form aufweist.

7. Vorrichtung nach einem der vorhergehenden Ansprüche, wobei die Ausfluchtung von Kammern (3) in einer vertikalen Richtung angebracht ist.

8. Vorrichtung nach einem der vorhergehenden Ansprüche, wobei mindestens eine der Kammern (3) der Einheit von Kammern magnetische Elemente umfasst, die unter der Einwirkung eines magnetischen Felds in Bewegung versetzt werden können.

9. Vorrichtung nach einem der vorhergehenden Ansprüche, umfassend Sensoren, die ausgelegt sind, um physikalische oder chemische Parameter in mindestens einer der Kammern der Einheit von Kammern zu steuern, und/oder Betätigungsvorrichtungen, die ausgelegt sind, um auf den Inhalt einer Kammer zu wirken.

10. Vorrichtung nach einem der vorhergehenden Ansprüche, wobei die Nadel (6) mit Sensoren und/oder Betätigungsvorrichtungen verbunden ist.

11. Vorrichtung nach einem der vorhergehenden Ansprüche, wobei die Nadel (6) angeordnet ist, um die Entnahme einer Probe durchzuführen.

12. Vorrichtung nach einem der vorhergehenden Ansprüche, wobei mindestens eine seitliche Wand einer Kammer (3) ein Septum (5) umfasst, das angeordnet ist, um eine Entnahme oder eine Einführung einer Menge von Fluid mit Hilfe einer zweiten Nadel (6) zu ermöglichen, die gemäß einer Querachse zur Ausfluchtungsachse der Kammern (3) verschoben wird.

13. Verfahren zur Herstellung einer Einheit von Speicher- und/oder Reaktionskammern, die in einer Vorrichtung nach einem der vorhergehenden Ansprüche verwendet wird, umfassend einen ersten Schritt des Herstellens einer Einheit von Kammerkörpern (22), deren Wand (4) mindestens eine Öffnung umfasst, die auf einer Seite der Anordnung mündet, dann einen zweiten Schritt des Anordnens des Kammerkörper (22) gemäß einer Richtung der Ausfluchtung, indem ein Septumblatt (5) zwischen zwei benachbarten Kammerkörpern (22) zwischen zwei Öffnungen eingeführt wird, um Speicherkammern (3) oder Reaktionskammern zu bilden.

14. Verfahren nach Anspruch 13, wobei der erste Schritt des Herstellens die Herstellung einer Einheit von Platten (26a, 26b, 26c) umfasst, die Kammerkörper (22) der gleichen Art gruppiert, dann einen zweiten Schritt des Anordnens von verschiedenen Platten (26a, 26b, 26c), indem ein Septumblatt (5) zwischen die Platten (26a, 26b, 26c) eingeführt wird.

15. Verfahren nach Anspruch 14, umfassend einen Schritt des Schneidens der Anordnung von Platten (26a, 26b, 26c) quer zur Ebene der Septa (5), um einzelne Vorrichtungen zu trennen.

16. Verfahren nach einem der Ansprüche 13 bis 15, wobei die Einheit von Kammern (3) durch Kleben angeordnet ist.

17. Verfahren nach einem der Ansprüche 13 bis 15, wobei die Einheit von Kammern (3) durch Schrauben angeordnet ist.

18. Verfahren nach einem der Ansprüche 13 bis 17, umfassend einen Schritt des Integrierens einer Nadel (6) in die Anordnung von Kammern (2).

## Claims

1. A device for preparing, processing and/or analyzing a biological sample comprising:
- a set (2) of storage and/or reaction chambers (3) intended to accommodate a fluid, said chambers (3) having common or adjacent walls (5) so as to form a set of adjacent chambers (3) aligned along a given axis, such that at least one of said walls (5) includes a membrane or septum, this membrane being likely to be pierced by a needle, then to recover its sealing once the needle removed, the one or more septum(septa) constituting the wall(s) being located in a plan crossed by the alignement axis of the chambers **characterized by** :
- means for displacing said fluid from and/or to at least one of said chambers (3) of the set (2), said displacement means comprising:
o a needle (6) connected to a transfer compartment (9, 14),
o suction/discharge means (8) of said liquid connected to the needle upstream thereof and separately from the volume of the chambers of the set (2), and
o driving means (7) arranged to displace in translation, one relative to the other, the needle (6) and the set (2) of chambers (3) according to the alignment axis of the chambers (3), the one or more septum (septa) constituting the wall(s) being located in a plan crossed by the alignement axis of the chambers

2. The device according to claim 1, wherein the transfer compartment (9) is arranged to allow the transfer of a quantity of fluid to processing means downstream of the device.

3. The device according to any of the preceding claims comprising, downstream of the suction/discharge means (8) and upstream of the needle (6) and the transfer compartment (14) a reaction chamber and/or detection means (15) likely to act on a biological sample.

4. The device according to any of the preceding claims, wherein the portion of the device carrying the needle comprises a chamber (10) for storing reaction waste.

5. The device according to claim 4, wherein the chamber (10) for storing reation waste is disposed upstream of the transfer compartment (9, 14).

6. The device according to any of the preceding claims, wherein at least one chamber (3) has a truncated-cone or conical shaped wall (4c).

7. The device according to any of the preceding claims, wherein the alignment of chambers (3) is disposed in the vertical direction.

8. The device according to any of the preceding claims, wherein at least one of the chambers (3) of the set of chambers comprises magnetic elements which may be moved under the effect of a magnetic field.

9. The device according to any of the preceding claims, comprising sensors intended for controlling physical or chemical parameters in at least one of the chambers of the set of chambers, and/or actuators intended for acting on the content of a chamber.

10. The device according to any of the preceding claims, wherein the needle (6) is connected to sensors and/or actuators.

11. The device according to any of the preceding claims, wherein the needle (6) is arranged to perform the sampling.

12. The device according to any of the preceding claims, wherein at least one lateral wall of a chamber (3) comprises a septum (5) arranged to allow a sampling or an introduction of a quantity of fluid by means of a second needle (6) displaced along an axis transverse to the alignment axis of the chambers (3).

13. A method for manufacturing a set of storage chambers and/or reaction chambers used in a device according to any of the preceding claims, comprising a first step for manufacturing a set of bodies of chambers (22) whose wall (4) comprises at least one opening leading to an assembly face, then a second step for assembling bodies of chambers (22) along an alignment direction by inserting a septum sheet (5) between two bodies of adjacent chambers (22) between two openings in order to form storage chambers (3) or reaction chambers.

14. The method according to claim 13, wherein the first manufacturing step comprises the manufacturing of a set of plates (26a, 26b, 26c) gathering chamber bodies (22) of the same type, then a second step for assembling different plates (26a, 26b, 26c) by inserting a septum sheet (5) between the plates (26a, 26b, 26c).

15. The method according to claim 14 comprising a step (26a, 26b, 26c) for cutting the assembly of plates (26a, 26b, 26c) transversely to the plan of the septa (5) so as to separate the individual devices.

16. The method according to any of claims 13 to 15, wherein the set of chambers (3) is assembled by bonding.

17. The method according to any of claims 13 to 15, wherein the set of chambers (3) is assembled by screwing.

18. The method according to any of claims 13 to 17, comprising a step for integrating a needle (6) into the assembly of chambers (2).
